# EUROPEAN PATENT APPLICATION

(11) **EP 4 773 480 A1**
(43) Date of publication of application: **08.07.2026**
(21) Application number: 24859243.8
(22) Date of filing: 23.07.2024
(51) Int. Cl.: H02K 9/19

(54) **ROTATING ELECTRICAL MACHINE**

(30) Priority: 01.09.2023 JP 2023142475
(71) Applicant: Hitachi Industrial Equipment Systems Co., Ltd., Tokyo 101-0021 (JP); Hitachi, Ltd., Tokyo 100-8280 (JP)
(72) Inventor: TOKOI Hirooki, Tokyo 100-8280 (JP); ASAUMI Yusuke, Tokyo 100-8280 (JP); TAKEUCHI Keisuke, Tokyo 100-8280 (JP); HASEGAWA Yu, Tokyo 100-8280 (JP); ENOMOTO Yuji, Tokyo 100-8280 (JP); KIMURA Mamoru, Tokyo 101-0021 (JP)
(74) Representative: MERH-IP Matias Erny Reichl Hoffmann Patentanwälte PartG mbB
(86) International application number: PCT/JP2024/026223
(87) International publication number: WO 2025/047200

(57) **Abstract**

A rotating electrical machine that sprays a liquid coolant onto end faces of a rotor is configured such that the coolant is less likely to enter a gap between the rotor and a stator. Protruding portions 36 and 39 having a cylindrical shape and protruding outward in an axial direction are provided on outer peripheral sides of end plates 35 disposed on end faces on both sides of a rotor core 31. Cooling oils 71 and 72 supplied from oil supply holes 4c and 5c of end brackets 4 and 5 of a rotating electrical machine 1 hit end faces of a rotor 30 as indicated by arrows 71a and 72a of the rotor 30, flow to the outer peripheral sides, move to positions (+Zrf and -Zrr) spaced apart from the rotor core 31 in the axial direction, due to the protruding portions 36 and 39 as indicated by arrows 71c and 72c, and are then guided to a stator core 11 side. In addition, the rotating electrical machine 1 is formed such that a coordinate +Zsf of a minimum inner diameter position of a resin 24 is closer to a center position of the rotor 30 than a coordinate +Zrf, and a coordinate -Zsr of a minimum inner diameter position of a resin 26 is closer to the center position than a coordinate -Zrr.

## Description

### TECHNICAL FIELD

The present invention relates to a rotating electrical machine that sprays a liquid coolant onto the end faces of a rotor in a direction of a rotation axis to cool the rotor and a stator, particularly to an improvement in the end face shape of the rotor and the shape of coil end portions of the stator.

### BACKGROUND ART

Against the background of global warming and the depletion of fossil fuels, the electrification and energy-saving of various power sources have been accelerating. Motors, which are key components, are required to meet specifications that maximize the performance of systems including mechanical devices serving as loads and inverters serving as drive circuits. Among these requirements, increasing motor speed is a specification in high demand for various applications. In motors used in electric vehicles (EVs) and hybrid electric vehicles (HEVs), specifications are employed to increase motor output (proportional to rotational speed × torque) through higher-speed operation, thereby achieving a reduction in motor size (proportional to torque). Increasing motor speed results in an increased gear reduction ratio; however, the overall system can be reduced in size. In motors for air compressors used as gear-driven devices, system efficiency has been improved by employing a direct-drive configuration for an air compressor, in which a compression mechanism (air end), which has been conventionally driven by increasing speed via a gear, is directly coupled to the rotating shaft of a motor without using a speed-increasing gear.

On the other hand, increasing motor speed results in increased losses in a rotor core and permanent magnets due to an increase in frequency and an increase in current harmonics, and therefore it is necessary to enhance cooling of the rotor. Various rotor cooling techniques using cooling oil have already been proposed. In relatively low-speed motors, a method in which cooling oil stored inside a rotating electrical machine is scooped up by the rotor is employed; however, in the case of high-speed rotation, such a method is difficult to apply since fluid friction loss increases. As a measure to prevent an increase in fluid friction loss, there is a method in which a flow passage is provided inside the rotating shaft and cooling oil flows therethrough. When cooling is simply applied only along the shaft center, a sufficient heat dissipation effect cannot be obtained due to being remote from a heat source, and therefore, the flow passage is often extended to an outer peripheral side of the rotor. In addition, in some configurations, cooling oil is injected onto coil end portions to also cool the stator side. However, in order to use the interior of the rotating shaft as a flow passage for cooling oil, it is necessary to deliver the cooling oil to the end portions of the rotating shaft, which requires the use of oil seals. When a flow passage for cooling oil is formed so as to extend to the rotor side, the structure becomes further complicated, thereby leading to an increase in cost. Therefore, a technique in which the cooling oil is injected onto the end faces of the rotor has been devised.

Patent Document 1 discloses a method in which flow passages for cooling oil are formed so as to penetrate through the front and rear end faces (for example, end brackets) of a housing of a motor, and the cooling oil is sprayed toward the end faces of a rotor via the flow passages. For this reason, flow passages for cooling oil are formed in the end brackets of the motor, the cooling oil pressurized by an oil pump is supplied to the flow passage, the outlet portions (nozzles) of the flow passages are disposed so as to face the end faces of the rotor, and the cooling oil is sprayed toward the end faces of the rotor. Since this method does not require oil seals at rotating parts or the formation of complex flow passages in the rotor, this method can be realized at low cost. Furthermore, since the cooling oil is supplied near a heat source of the rotor, a high heat dissipation effect can be expected.

### CITATION LIST

### PATENT DOCUMENT

Patent Document 1: JP 2006-6091 A

### SUMMARY OF THE INVENTION

### PROBLEMS TO BE SOLVED BY THE INVENTION

In the cooling mechanism described in Patent Document 1, the cooling oil adhering to the end faces of the rotor is subjected to a circumferential velocity component in a rotation direction and a radial velocity component due to centrifugal force, splashes toward a stator side, moves to approach the center position of the rotor as viewed in the direction of a rotation axis, and enters an air gap (or gap) between the rotor and a stator, which is not desirable. When the cooling oil having a higher viscosity than air enters the gap between the rotor and the stator, fluid friction loss increases. Since the fluid friction loss is proportional to the rotational speed, the fluid friction loss becomes a factor that significantly reduces the efficiency of the rotating electrical machine, particularly during high-speed rotation.

The present invention has been made in view of the above-described background, and an object of the present invention is to achieve both enhancement of heat dissipation of a rotor and maintenance of efficiency of a rotating electrical machine, in the rotating electrical machine including a cooling mechanism for spraying a liquid coolant onto the end faces of the rotor.

Another object of the present invention is to provide a rotating electrical machine that is configured such that a liquid coolant is less likely to enter a gap portion between a rotor and a stator.

### SOLUTIONS TO PROBLEMS

The following is a description of representative features of the invention disclosed in the present application.

According to one feature of the present invention, there is provided a rotating electrical machine including a rotating shaft; a rotor; and a stator, in which the rotor is configured such that a permanent magnet is provided in a rotor core fixed to the rotating shaft. The stator includes a stator core and a coil, and coil end portions are formed outward from end portions of the stator core in a direction of a rotation axis. A cooling mechanism for directly spraying a liquid coolant, which is supplied from outside the rotating electrical machine, onto axial end faces of the rotor is provided. Shapes of the stator and the rotor are set such that an absolute value of a coordinate Zr of each of end portions of the rotor as viewed in the direction of the rotation axis from an axial center position of the rotor and an absolute value of a coordinate Zs of a tip of an innermost peripheral portion of the corresponding coil end portion on a positive side or a negative side as viewed in the direction of the rotation axis satisfy |Zs| ≤ |Zr|. The relationship of |Zs| ≤ |Zr| is preferably established over the entire circumference of the stator; however, it is sufficient that this relationship is established at least one location in a circumferential direction. Furthermore, protruding portions that are continuous in the circumferential direction are provided on the end faces of the rotor in the direction of the rotation axis located radially outward of end portions of the cooling mechanism, and the absolute value |Zr| of a coordinate of an end portion of each of the protruding portions in the direction of the rotation axis is set to be equal to or greater than |Zs|, or a stack thickness (a length in the direction of the rotation axis) of the rotor core is set to be larger than a stack thickness (a length in the direction of the rotation axis) of the stator core.

According to another feature of the present invention, end plates are provided on end faces of the rotor core in the direction of the rotation axis, and the protruding portions having a cylindrical shape and protruding in the direction of the rotation axis are provided in the vicinities of outer peripheries of the end plates. An absolute value of a coordinate of a tip of each of the protruding portions as viewed in the direction of the rotation axis is set such that the relationship of |Zs| ≤ |Zr| is satisfied. An inclined portion is preferably provided on an inner periphery of each of the protruding portions such that an inner diameter increases toward a radially outer side in a linear shape, a curved shape, or a stepped shape. In addition, the protruding portions on an output side and a non-output side may have the same shape or different shapes in accordance with a difference in shape between the coil end portions of the stator on the output side and the non-output side. A plurality of permanent magnets are held in the rotor core of the rotor, and the protruding portions are formed such that a radius Rm of an innermost diameter portion of each of the permanent magnets and a radius Rt of an innermost diameter portion of each of the protruding portions satisfy a relationship of Rm < Rt.

According to a still another feature of the present invention, there is provided a rotating electrical machine in which end plates having a plate shape are provided on end faces on both sides of a rotor core having a cylindrical shape in a direction of a rotation axis, a liquid coolant is directly sprayed from outside a housing onto the end plates via dedicated coolant passages, and protruding portions having a cylindrical shape and being continuous in a circumferential direction are formed on outer peripheral portions of the end plates located radially outward of spray center points of the liquid coolant, so as to guide the sprayed liquid coolant in directions away from the end plates toward outer sides in the direction of the rotation axis.

### EFFECTS OF THE INVENTION

According to the present invention, since the splashing position of the liquid coolant splashing from the rotor toward the stator side is spaced apart from a gap portion between the rotor and the stator, and the liquid coolant adhering to the stator moves in directions opposite to the gap side, an increase in fluid friction loss due to the liquid coolant can be suppressed, thereby achieving both high heat dissipation of the rotor and high efficiency of the rotating electrical machine.

Problems, configurations, and effects other than those described above will become apparent from the following description.

### BRIEF DESCRIPTION OF THE DRAWINGS

[Fig. 1] A perspective view illustrating the appearance of a rotating electrical machine 1 according to a first embodiment of the present invention.
[Fig. 2] A cross-sectional perspective view illustrating an internal structure of the rotating electrical machine 1 of Fig. 1.
[Fig.3] A vertical cross-sectional view of the rotating electrical machine 1 of Fig. 2 taken along line A-A.
[Fig. 4] A schematic partial cross-sectional view for explaining a configuration of the rotating electrical machine 1 according to the first embodiment of the present invention.
[Fig. 5] A schematic partial cross-sectional view for explaining a configuration of a rotating electrical machine 1A according to a modification example of the first embodiment of the present invention.
[Fig. 6] A schematic partial cross-sectional view for explaining a configuration of a rotating electrical machine 1B according to a second embodiment of the present invention.
[Fig. 7] A schematic partial cross-sectional view for explaining a configuration of a rotating electrical machine 1C according to a third embodiment of the present invention.
[Fig. 8] A schematic partial cross-sectional view for explaining a configuration of a rotating electrical machine 1D according to a fourth embodiment of the present invention.
[Fig. 9] A cross-sectional view of mold dies 300 and 300A and stators 10 and 110 during molding of the stator 10, in which Fig. 9A illustrates a die structure in the present embodiment, and Fig. 9B illustrates a die structure in a conventional example.
[Fig. 10] A schematic partial cross-sectional view for explaining a configuration of a rotating electrical machine 101 of a conventional example.
[Fig. 11] A schematic partial cross-sectional view for explaining a configuration of a rotating electrical machine 101A of a conventional example.

### MODE FOR CARRYING OUT THE INVENTION

### First embodiment

Hereinafter, embodiments of the present invention will be described with reference to the drawings. In the following figures, the same reference signs are assigned to the same portions, and redundant description thereof will be omitted. In addition, in this specification, the forward-rearward, left-right, and up-down directions are described as the directions indicated in the figures.

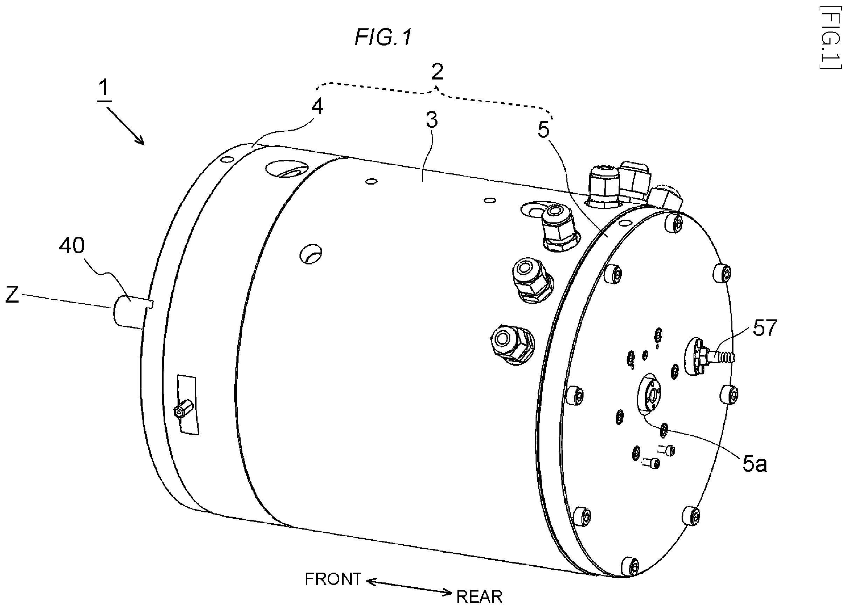

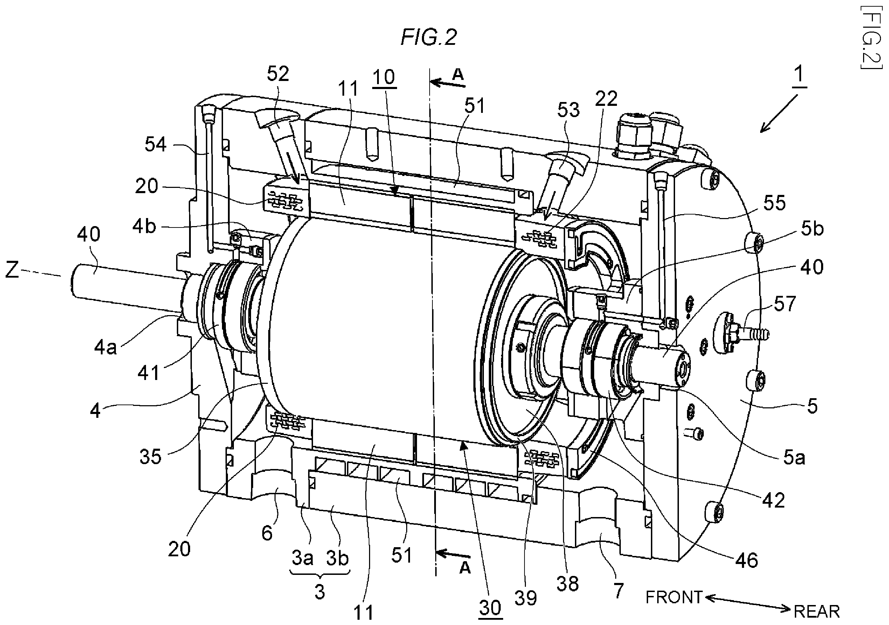

Fig. 1 is a perspective view illustrating the appearance of a rotating electrical machine 1 according to an embodiment of the present invention. The rotating electrical machine 1 is, for example, an electric motor, and is configured such that a rotating shaft 40, a rotor 30 ( see Fig. 2 to be described later), and a stator 10 (see Fig. 2 to be described later) are accommodated in a housing 2. The housing 2 is formed in a split shape, and in this case, is formed by a cylindrical portion 3 and end brackets 4 and 5 having a disk shape and provided to close opening portions at both ends of the cylindrical portion 3. The cylindrical portion 3 is configured in a two-piece split shape in which a hollow portion (to be described later with reference sign 51 in Fig. 2) through which cooling oil flows is formed. Through-holes 4a (see Fig. 2 to be described later) and 5a are formed in the end brackets 4 and 5, and the rotating shaft 40 penetrates therethrough. The rotating shaft 40 extends significantly forward beyond the end bracket 4 on the front side, and is connected to a load unit (not illustrated) directly or via a power transmission mechanism. It should be noted that a structure in which the end bracket 5 on the rear side is not provided with the through-hole 5a may be employed. A plurality of connection portions for connecting pipes for supplying a liquid coolant are formed on the cylindrical portion 3 and the end brackets 4 and 5 of the housing 2. A pipe connection portion 57 is a connection portion for a pipe that supplies the cooling oil to the rear end face of the rotor 30 (to be described later with reference to Fig. 2).

Fig. 2 is a cross-sectional perspective view illustrating an internal structure of the rotating electrical machine 1 of Fig. 1. The rotating electrical machine 1 includes the stator 10 having an annular shape and the rotor 30 disposed inside the stator 10. The outer peripheral portion of the stator 10 is fixed to the inner peripheral wall of the cylindrical portion 3 of the housing 2, and the rotor 30 is fixed to the rotating shaft 40. The cylindrical portion 3 is formed by a front portion 3a and a rear portion 3b, and the space formed at the joint portions thereof serves as a first cooling passage 51. A bearing holder 4b having a cylindrical shape and extending rearward is formed at the outer peripheral portion of the through-hole 4a of the end bracket 4, and a bearing 41 is provided inside the bearing holder 4b. Similarly, a bearing holder 5b having a cylindrical shape and extending forward is formed from the outer peripheral portion of the through-hole 5a of the end bracket 5, and a bearing 42 is provided inside the bearing holder 5b. The rotating shaft 40 is rotatably supported by the two bearings 41 and 42.

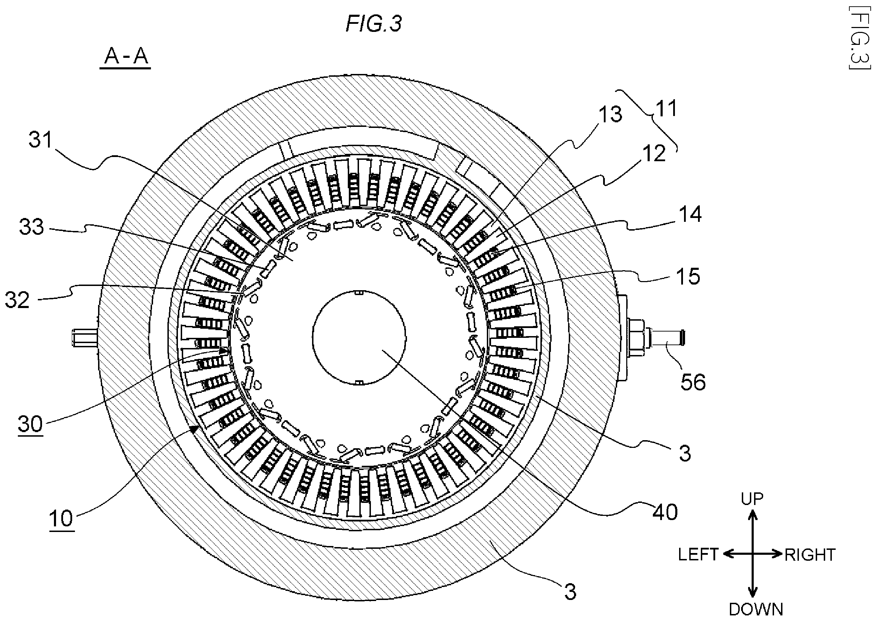

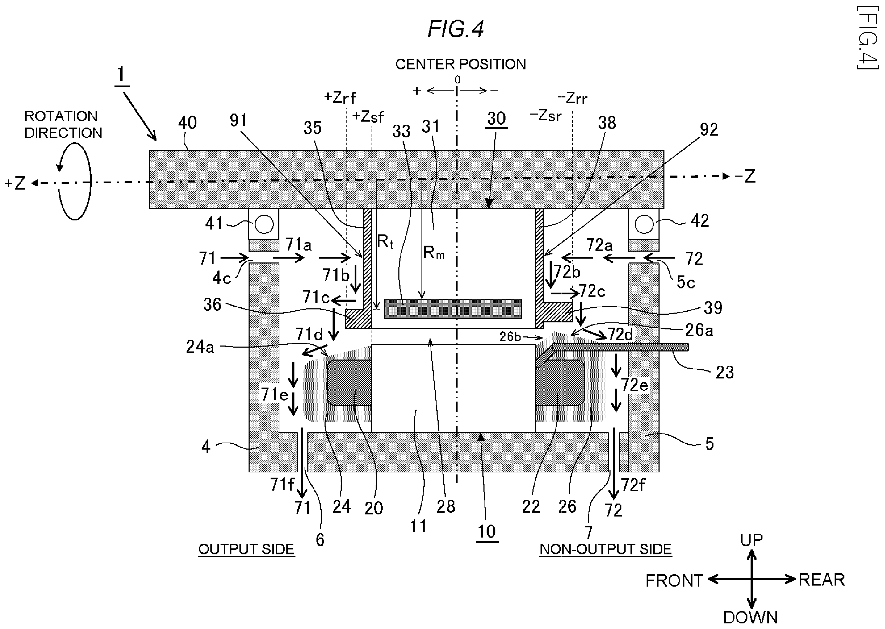

The stator 10 is mainly composed of a stator core 11 and coils wound in slots (to be described later with reference to Fig. 3) of the stator core 11. A coil end 20 protrudes from the front side of the stator core 11, and a coil end 22 protrude from the rear side. Both the coil ends 20 and 22 are molded with resin (to be described in detail with reference to Fig. 4 and subsequent figures). Lead wires (not visible in the figure) extend from the coil end 22, and are wired at a connection plate 46 in a star connection or a delta connection.

The housing 2 is provided with four systems of cooling passages through which a coolant flows to cool heat-generating portions A liquid coolant is used, and is, for example, a cooling oil. The main components to be cooled by the cooling passages are the stator 10, the rotor 30, and the bearings 41 and 42. The first cooling passage 51 mainly cools the stator core 11 and the coil (20, 22, and the like) by allowing the cooling oil to flow through the hollow portion (the first cooling passage 51) formed in the cylindrical portion 3 on the outer peripheral side of the stator 10. An inlet and an outlet for cooling oil (both not visible in the figure) are connected to the first cooling passage 51, and the cooling oil circulates in the first cooling passage 51 in a circumferential direction. The first cooling passage 51 is configured for indirect cooling in which the cooling oil does not come into direct contact with the components to be cooled.

A cooling oil supply port 52 for cooling the coil end 20 of the stator 10 and a cooling oil supply port 53 for cooling the coil end 22 are formed in the cylindrical portion 3. The cooling oil supplied from an external pipe is directly supplied to the outer peripheral surface of the coil end 20 from the cooling oil supply port 52. The cooling oil supplied to the outer peripheral surface of the coil end 20 flows mainly in the circumferential direction along the outer peripheral surface of the coil end 20 toward the bottom surface of the housing 2, and is discharged from a discharge port 6 to the outside. Similarly, the cooling oil is directly supplied to the outer peripheral surface of the coil end 22 from the cooling oil supply port 53. The cooling oil supplied to the outer peripheral surface of the coil end 22 flows mainly in the circumferential direction along the outer peripheral surface of the coil end 22 toward the bottom surface of the housing 2, and is discharged from a discharge port 7 to the outside. Flow passages that supply the coolant to the front side and the rear side of the stator 10 are second cooling passages 52 and 53, and are direct cooling passages.

A third cooling passage 54 through which the cooling oil flows from outside is formed in the end bracket 4. The cooling passage 54 extends through the end bracket 4 from a radially outer side to a location near the center, changes its direction by 90 degrees, and extends rearward through the bearing holder 4b to directly supply the cooling oil for lubrication and cooling to the bearing 41. Similarly, a third cooling passage 55 through which the cooling oil flows from outside is formed in the end bracket 5. The cooling passage 55 extends through the end bracket 5 from a radially outer side to a location near the center, changes its direction by 90 degrees, and extends forward through the bearing holder 5b to directly supply the cooling oil to the bearing 42. The cooling passages 54 and 55 are direct cooling passages.

Fourth cooling passages that supply the cooling oil from outside and supply the cooling oil to the front end face and the rear end face of the rotor 30 are further formed in the end brackets 4 and 5. The fourth cooling passages are mechanisms for cooling the rotor 30, and directly spray the cooling oil onto end plates 35 and 38 located on the end faces of the rotor 30. An inlet of a cooling passage that sprays the cooling oil onto the end plate 38 is the pipe connection portion 57. It should be noted that a pipe connection portion 56 (to be described later with reference to Fig. 3) serving as an inlet of one of the fourth cooling passages that supplies the cooling oil to the front end face (the end plate 35) of the rotor 30 is separately provided on the right side surface of the cylindrical portion 3 of the housing 2. Rotor cooling mechanisms are configured such that pipes or nozzles (not visible in the figure) oriented toward the end faces of the rotor 30 are attached to the inner wall surface of the housing 2, and the cooling oil is sprayed from the nozzles in the vicinity of the rotor 30 onto the end plates 35 and 38 in a direction substantially parallel to the rotation axis Z. An oil pump (not illustrated) and oil pipes (not illustrated) for delivering the cooling oil (not illustrated) to the first to fourth flow passages are connected to the outside of the housing 2 of the rotating electrical machine 1. The cooling oil supplied to the interior of the housing 2 by the fourth cooling passages is discharged from the discharge ports 6 and 7 to the outside of the housing 2, together with the cooling oil supplied by the second and third cooling passages.

Fig. 3 illustrates a vertical cross-sectional view of the rotating electrical machine 1 of Fig. 1 taken along line A-A. This cross-sectional view illustrates a cross-section orthogonal to a rotation axis Z. The stator core 11 of the stator 10 is composed of teeth 12 made of an amorphous metal and a back yoke 13 made of an electromagnetic steel sheet. However, the stator 10 is of any type, and may have a shape in which the teeth 12 and the back yoke 13 are integrally formed. Spaces between the adjacent teeth 12 are slots, and a plurality of rectangular wire coils 14 are disposed in a radial direction in the slots via a bobbin 15. Although not illustrated here, each rectangular wire coil 14 is split into a segment on one side (the front side) and a segment on the other side (the rear side) in the vicinity of a central portion of the stator 10 in the direction of the rotation axis Z, and the winding of the coil 14 is formed as a closed circuit by fitting the segments to each other at concave and convex connection portions (terminal portions) formed at the tips of the split surfaces. The rotor 30 uses, as a base material, a rotor core 31 formed by stacking a large number of thin annular electromagnetic steel sheets in the direction of the rotation axis Z, and a permanent magnet 33 having a plate shape and made of sintered neodymium is disposed in each of a large number of the slots 32 for accommodating magnets that are formed close to the outer edge of the rotor core 31. The pipe connection portion 56 of the fourth cooling mechanism is formed on the right side surface of the cylindrical portion 3 of the housing 2, at a portion close to the end bracket 4 on the front side (see Fig. 2). It should be noted that, in Fig. 3, no hatching lines are applied to the cross-sections of the rotor 30 and the stator 10, and attention should be paid accordingly.

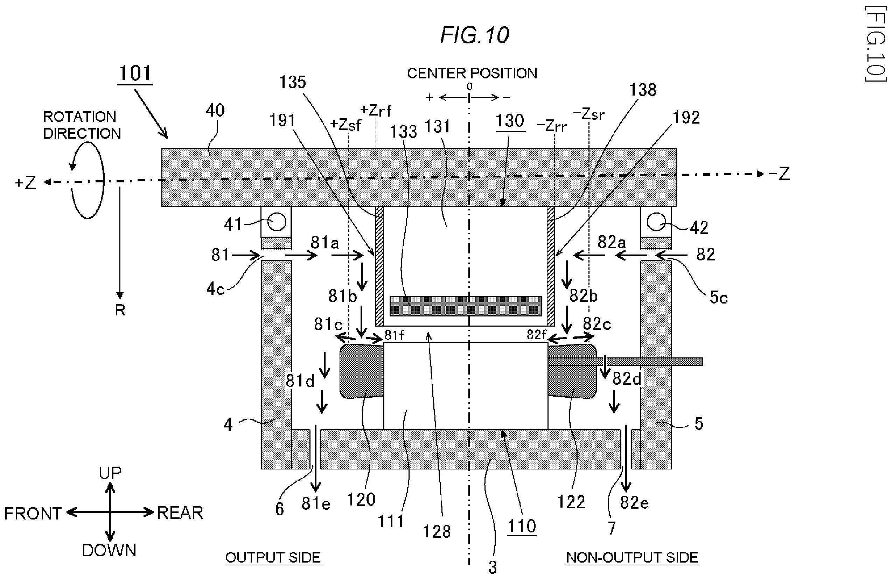

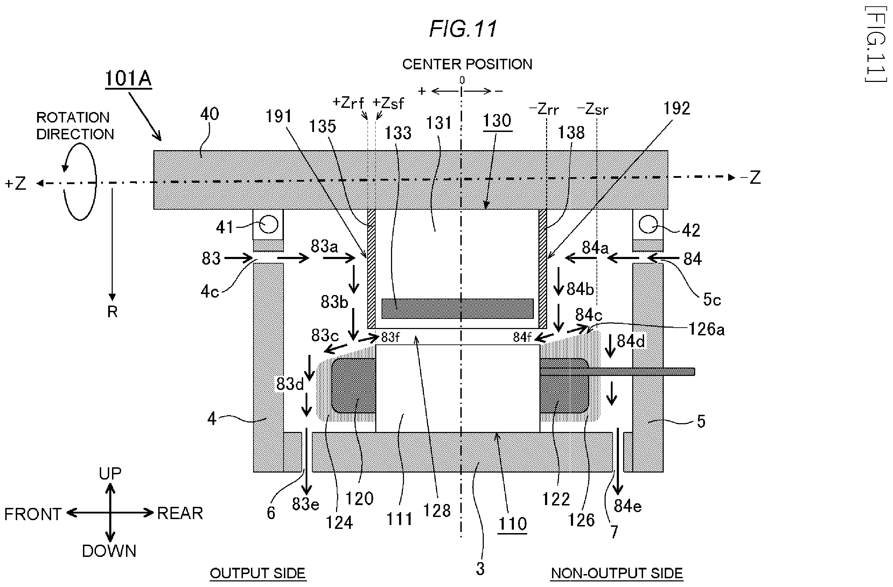

Here, before the fourth cooling mechanism of the rotating electrical machine 1 of the present invention, that is, the configuration for spraying the cooling oil onto the rotor 30 is described, the flow of cooling oil of a rotating electrical machine 101 according to a conventional example will be described with reference to Figs. 10 and 11. Fig. 10 is a partial cross-sectional view for explaining the shapes of a rotor 130 and a stator 110 and the flows of cooling oils 81 and 82 in the rotating electrical machine 101 of the conventional example.

The shapes of a rotor core 131 and a magnet 133 of the rotor 130 in Fig. 10 are the same as that of the rotor 30 illustrated in Figs. 2 and 3. Since this figure is a schematic illustration for explaining the outline of the configuration, and no hatching lines are applied to the rotor core 131 and a stator core 111, attention should be paid. The stator core 111 is referred to as a laminated core formed by stacking a large number of thin electromagnetic steel sheets in the direction of the rotation axis Z. Coils are wound in slot portions of the stator core 111. The portion of the coil that is exposed from the stator core 111 on the front side is a coil end 120, and a coil end 122 extending rearward from the stator core 111 is formed on the rear side. In such a rotating electrical machine 101, the cooling oil 81 is sprayed from an oil supply hole 4c, which is provided in the end bracket 4 on the front side, onto the front surface of an end plate 135 on the front side of the rotor 130. Similarly, the cooling oil 82 is sprayed from an oil supply hole 5c, which is provided in the end bracket 5 on the rear side, onto the rear surface of an end plate 138 on the rear side of the rotor 130.

The cooling oil 81 sprayed from the oil supply hole 4c is sprayed rearward toward a spray center point 191 in a direction parallel to the rotation axis Z, as indicated by arrow 81a. This spray may have a linear shape or a shape in which the cooling oil 81 diffuses in a conical shape. Similarly, the cooling oil 82 sprayed from the oil supply hole 5c is sprayed forward toward a spray center point 192 in a direction parallel to the rotation axis Z, as indicated by arrow 82a. Although not illustrated here, extension pipes and nozzles may be provided at inner opening portions of the oil supply holes 4c and 5c such that the cooling oils 81 and 82 are sprayed in predetermined directions with a predetermined degree of diffusion. Even in the case of providing nozzles (not illustrated), the center points of spray are set to become the spray center points 191 and 192. The spray center points 191 and 192 are set to be radially outward of the bearings 41 and 42 and radially inward of the outer edge of the rotor 130. The spray center points 191 and 192 are set at one location in the circumferential direction on the front end face of the rotor 130 and one location in the circumferential direction on the rear end face, respectively.

The cooling oil 81 that hits the end plate 135 on the front side of the rotating rotor 130 flows radially outward along the end plate 135 due to centrifugal force, as indicated by arrow 81b, while rotating in the circumferential direction, separates from the outer peripheral end of the end plate 135, and reaches the inner peripheral surface of the coil end 120. Thereafter, the majority of the cooling oil 81 flows along the inner peripheral surface and the vertical surface of the coil end 120 as indicated by arrows 81c and 81d, falls onto the bottom surface of the cylindrical portion 3, and is discharged from the discharge port 6, which is formed in a bottom region, as indicated by arrow 81e.

The cooling oil 82 also flows in the same manner; the cooling oil 82 that is sprayed as indicated by arrow 82a and hits the end plate 138 on the rear side flows radially outward due to centrifugal force, as indicated by arrow 82b, while being rotated in the circumferential direction by the end plate 138 on the rear side of the rotating rotor 130, separates from the outer peripheral end of the end plate 138, flows along the inner peripheral surface and the vertical surface of the coil end 122 as indicated by arrows 82c and 82d, falls onto the bottom surface of the cylindrical portion 3, and is discharged from the discharge port 7, which is formed in a bottom region, as indicated arrow 82e. The discharged cooling oil 82 is recovered together with the cooling oil 81 by a recovery line (not illustrated) for cooling oil, is cooled, and then is reused.

Since the cooling oils 81 and 82 in the vicinities of arrows 81b and 82b are accelerated in the circumferential direction and the radial direction and splash in the vicinities of the roots of the coil ends 120 120 and 122, the cooling oils 81 and 82 may enter the interior of a gap 128 as indicated by arrows 81f and 82f. Furthermore, depending on the shapes of the coil ends 120 and 122 on the stator 110 side, the cooling oils 81 and 82 splashed toward the stator 110 side may enter the gap 128 due to gravity or the like. For example, in Fig. 10, in order to avoid interference between the wire strands, the end portions of the coil ends 120 and 122 are inclined such that the inner diameters increase toward the center position of the rotor 130 as viewed in the Z-axis direction (here, the forward-rearward direction). A distributed-winding coil using round wires often has such a shape. In the case of having such an inclination, the cooling oils 81 and 82 splashed in the vicinity of the gap 128 are more likely to enter the gap 128.

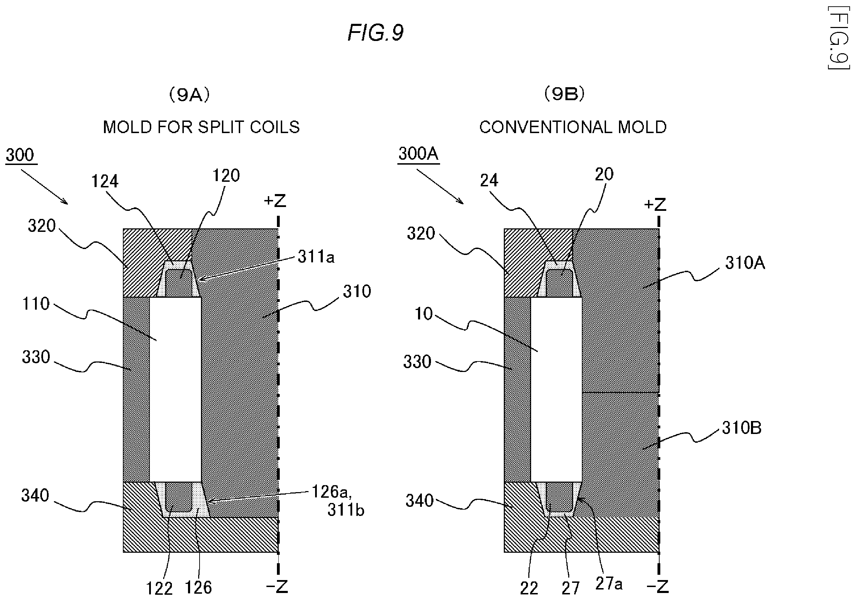

Fig. 11 is a cross-sectional view of a rotating electrical machine 101A in which the coil ends 120 and 122 are molded with resins 124 and 126. The coil end 120 and the resin 124 form a coil end portion on the front side, and the coil end 122 and the resin 126 form a coil end portion on the rear side. In such a manner, the entire coil including the coil ends 120 and 122 may be molded in anticipation of an improvement in the holding strength of the coil and an improvement in heat dissipation through higher thermal conductivity. When the coil ends 120 and 122 are molded, as illustrated in Fig. 9A, it is necessary to provide draft tapers 311a and 311b on a mold die for forming the inner diameter side (hereinafter, a core die 310). Further, when the entire coil from an output side to a non-output side is molded with the integrated core die 310, the inclination directions of the inner peripheral surfaces of the resin 126 need to be set to the same direction on the output side and the non-output side. In this structure, the inner peripheral surface (the side closer to the rotation axis Z) of the mold 126 on the non-output side needs to have a tapered shape 126a in which the inner diameter decreases toward the rear end portion (-Z direction), and in this shape, the splashed cooling oil is more likely to enter the gap 128 as indicated by arrow 84f. In addition, in the case of the rotating electrical machine 101A in which the coil ends 120 and 122 are molded with the resins 124 and 126, since the cooling oil does not flow out through the gaps between the coils, the risk of the cooling oil entering the gap 128 is further increased. It should be noted that, in a rotating electrical machine having a distributed wave winding using rectangular wires, which is used in many vehicle-mounted motors, since the coil ends rise substantially perpendicularly from the end faces, the coil does not have the shape as illustrated in Fig. 10; however, when molded, the same problems as those in Fig. 11 become apparent.

Next, a configuration of the rotating electrical machine 1 according to a first embodiment of the present invention will be described with reference to Fig. 4. Fig. 4 is a schematic partial cross-sectional view illustrating the configuration of the rotating electrical machine 1. Hereinafter, in this specification, the positions of the end portions of the rotor 30 are described based on the extent in the forward direction (+Z direction) and the extent in the rearward direction (-Z direction), with the center position of the rotor 30 as a reference (coordinate 0) as viewed in the direction of the rotation axis Z.

The end plates 35 and 38, which are metal members separate from the rotor core 31, are provided on the end faces of the rotor core 31 in the ±Z directions along the rotation axis. The end plates 35 and 38 are often provided due to such reasons as adjusting the rotation balance of the rotor 30 and inhibiting the movement of the permanent magnet 33 in the ±Z directions along the rotation axis. Cooling oil 71 flowing in from the oil supply hole 4c of the end bracket 4 is sprayed in the -Z direction toward a surface (front surface) of the end plate 35 on the front side, as indicated by arrow 71a. The cooling oil 71 is sprayed linearly or diffusely toward a spray center point 91 of the end plate 35 as indicated by arrow 71a, and has, for example, a conical spread. Similarly, cooling oil 72 flowing in from the oil supply hole 5c of the end bracket 5 is also sprayed linearly or diffusely in the +Z direction toward a surface (rear surface) of the end plate 38 on the rear side, as indicated by arrow 72a.

On the end plates 35 and 38 having a disk shape, in each of which a through-hole through which the rotating shaft 40 penetrates is formed at the center, a protruding portion 36 protruding forward from a surface (a surface that is not in contact with the rotor core 31) of the end plate 35 and a protruding portion 39 protruding rearward from a surface of the end plate 38 are provided at portions located in the vicinities of the outer peripheral edges and radially outward (outer diameter side) of the spray center points 91 and 92 of the cooling oils 71 and 72. The protruding portions 36 and 39 are cylindrical members, each having a cross-sectional shape that is uniform and continuous in the circumferential direction; however, the protruding portion 36 on the output side and the protruding portion 39 on the non-output side are formed in different shapes. In Fig. 4, the end plate 35 and the protruding portion 36, as well as the end plate 38 and the protruding portion 39, are integrally formed; however, the protruding portions 36 and 39 may be manufactured separately from the end plates 35 and 38 as separate components instead of being integral with each other. Since the end plates 35 and 38 or the protruding portions 36 and 39 are desirably high thermal conductivity members from the viewpoint of improving heat dissipation, and are desirably made of a non-magnetic material from the viewpoint of reducing leakage magnetic flux of the rotor 30, the end plates 35 and 38 or the protruding portions 36 and 39 are preferably made of an aluminum alloy, non-magnetic stainless steel, or the like.

The coil end 20 on the front side of the stator 10 and the coil end 22 on the rear side are molded with resins 24 and 26, respectively. Here, the coil end portions on the front side and the rear side are formed to include the portions of the resins 24 and 26; however, the coil end portions may be formed only of the coil ends 20 and 22 without using the resins 24 and 26. On the inner peripheral surfaces of the molded resins 24 and 26, tapered portions 24a and 26a in which the inner diameter increases in directions away from the center position are formed on both the output side and the non-output side. The tapered portion 24a on the output side has a shape in which the inner diameter monotonically increases from the boundary with the stator core 11. On the other hand, regarding the tapered portion 26a on the non-output side, since a lead wire 23 drawn out from the coil end 22 significantly protrudes radially inward, a tapered portion 26b in which the inner diameter once significantly decreases from the stator core 11 toward the rear is formed, and thereafter, the tapered portion 26a having a shape in which the inner diameter increases is formed. It should be noted that the reason that the lead wire 23 is set to significantly protrude toward the inner diameter side is to transmit an axial load also to the fitting portion of the lead wire during fitting of the coils that are split in the axial direction.

The inner position (a portion closer to the rotation axis Z) of the protruding portion 36 is located radially outward of the inner position (the inner peripheral position closer to the rotation axis Z) of the permanent magnet 33 as viewed in the radial direction R. Namely, the permanent magnet 33 is disposed in the rotor core 31 such that the radius Rm of the innermost diameter portion of the permanent magnet 33 and the radius Rt of the innermost diameter portion of the protruding portion 36 satisfy Rm < Rt. In addition, the protruding tip position of the protruding portion 36 (the +Z coordinate of the rotor 30 on the front side) is +Zrf, and the inner position thereof is located radially outward of the inner position (the inner peripheral position closer to the rotation axis Z) of the permanent magnet 33. In addition, the protruding tip position of the protruding portion 36 is located forward of a position +Zsf, which is the position where the diameter of the coil end portion on the stator 10 side is at its minimum (corresponding to the position of the front end face on the front side of the stator core 11). Namely, the relationship of |Zsf| ≤ |Zrf| is satisfied.

The inner position of the protruding portion 39 is located radially outward of the inner position (the inner peripheral position closer to the rotation axis Z) of the permanent magnet 33. In addition, the protruding tip position of the protruding portion 39 (the distance from the end plate 38 in the -Z direction along the rotation axis) is -Zrr, and the position thereof is located rearward of the position of the rear end face of the stator core 11 of the stator 10. It should be noted that the protrusion amount of the protruding portion 36 toward the front side in the direction of the rotation axis and the protrusion amount of the protruding portion 39 toward the rear side in the direction of the rotation axis are not the same. The reason is that the protrusion sizes of the protruding portions 36 and 39 in the direction of the rotation axis Z are determined in accordance with the shape of the stator 10 side, particularly the minimum inner diameter positions of the resins 24 and 26. The outer diameter of the protruding portion 39 are formed to be slightly smaller than the outer diameter of the protruding portion 36 in order to avoid an inwardly convex portion of the resin 26 (a mountain-shaped portion formed by the tapered portions 26a and 26b and corresponding to a minimum inner diameter portion). In addition, the inner diameter of the protruding portion 36 is formed to be slightly larger than the inner diameter of the protruding portion 39. Furthermore, the rearmost position -Zrr of the protruding portion 39 is located rearward of a position +Zsr, which is the position of the innermost peripheral portion of the coil end portion, here, a position between the tapered portions 26a and 26b where the diameter of the resin 26 is at its minimum. Namely, the absolute values of these positions satisfy the relationship of |Zsr| ≤ |Zrr|.

The positional relationship between the protruding portions 36 and 39 and the coil ends 20 and 22 is configured to satisfy |Zsf| ≤ |Zrf| on the front side (the output side) and to satisfy |Zsr| ≤ |Zrr| on the rear side (the non-output side). Namely, when the final suffixes "f" and "r" indicating the front and the rear are excluded, the relationship of |Zs| ≤ |Zr| is satisfied in any of the directions. In the shape of the resin 24 in Fig. 4, the coordinate Zsf coincides with the coordinate of an end face of the rotor core 31. On the other hand, in the coil end 22 on the non-output side, since the draft tapered portion 26b formed during molding remains on the inner peripheral side except for the outer peripheral side, the coordinate -Zsr is a position spaced apart rearward from the rear end face of the stator core 11, and is the boundary position between the tapered portions 26b and 26a.

Next, the operation of the rotating electrical machine 1 will be described. A DC magnetic field is generated on the radially outer side of the rotor 30 by the permanent magnet 33. Meanwhile, three-phase power converted to a predetermined frequency by an inverter (not illustrated) is generated and supplied to the coils 14 (see Fig. 3) of the stator 10, so that a rotating magnetic field is formed in the radial direction of the stator 10. By applying an excitation current to the coils 14 in accordance with the magnetic pole positions of the stator 10, a predetermined torque is generated in the rotor 30 due to attraction and repulsion between the rotating magnetic field and the DC magnetic field, so that the rotating shaft 40 can be rotated in a predetermined direction (rotation direction). When the rotating electrical machine 1 is driven, the cooling oil is delivered to each of the first to fourth flow passages by the oil pump (not illustrated). In such a manner, by allowing the cooling oil to flow through the direct cooling flow passages and the indirect cooling flow passage inside the housing 2, heat-generating portions of the rotating electrical machine 1 are cooled.

It is sufficient that the cooling oils 71 and 72 sprayed from the fourth rotor cooling mechanism can be directly supplied to the front end face and the rear end face of the rotor 30, and the nozzles or pipe structures thereof are arbitrary. The cooling oils 71 and 72 may be supplied using pipes and nozzles from the end brackets 4 and 5 of the housing 2, or a configuration in which a portion of the cooling oil supplied to the bearings 41 and 42 is branched and the branched cooling oil is sprayed from branched flow passages onto the end faces of the rotor 30 may be employed. The cooling oils 71 and 72 sprayed onto the front end face (the end plate 35) and the rear end face (the end plate 38) of the rotor 30 as indicated by arrows 71a and 72a hit the end plate 35 and 38, and move radially outward while rotating in the circumferential direction on the surfaces of the end plates 35 and 38 due to surface tension, as indicated by arrows 71b and 72b.

Since the cooling oils 71 and 72 that have reached the inner peripheral surfaces of the protruding portions 36 and 39 are inhibited from moving radially outward by the protruding portions 36 and 39, the cooling oils 71 and 72 move in the direction of arrows 71c and 72c away from the end plates 35 and 38, which is the direction of the rotation axis Z, and flow radially outward along the front end face of the protruding portion 36 and the rear end face of the protruding portion 39, and the cooling oil splashing from the rotor 30 toward the stator 10 side splashes toward the sides of the coil ends 20 and 22 at positions spaced apart from a gap 28. At this time, the cooling oils 71 and 72 splash at positions that are spaced apart outward from the front opening surface and the rear opening surface of the gap 28 by the heights (the lengths in the direction of the rotation axis Z) of the protruding portions 36 and 39. Accordingly, the amount of cooling oil entering the gap 28 due to splash back or the like upon adhesion of the cooling oils 71 and 72 to the inner peripheral surfaces of the coil ends 20 and 22 can be effectively suppressed.

Furthermore, since the resins 24 and 26 are formed as the tapered portions 24a and 26a, in which the inner diameter increases toward the end brackets 4 and 5, at positions where the cooling oils 71 and 72 have adhered, the flows of the cooling oils 71 and 72 in directions toward the gap 28 can be suppressed due to kinetic energy upon incidence of the cooling oils 71 and 72 onto the tapered portions 24a and 26a, or gravity. Therefore, an increase in fluid friction loss due to the entry of the cooling oils 71 and 72 into the gap 28 can be suppressed. In addition, since the cooling oils 71 and 72 also move in the direction of the rotation axis along the protruding portions 36 and 39 as indicated by arrows 71c and 72c, the contact area between the cooling oils 71 and 72 and the end plates 35 and 38 of the rotor 30 increases, and therefore, the amount of heat dissipation from the rotor core 31 to the cooling oils 71 and 72 increases. Particularly, since flow passages for the cooling oils 71 and 72 are formed in the vicinities of the front end face and the rear end face of the permanent magnet 33, which is a main heat source, as indicated by arrows 71c and 72c, the permanent magnet 33 can be actively cooled. As described above, both an improvement in heat dissipation of the rotor 30 and high efficiency of the rotating electrical machine 1 can be achieved.

In the present embodiment, in order to avoid interference between the coil end 26 protruding toward the inner diameter side and the protruding portion 39, and to cause the cooling oil 72 to splash toward the tapered portion 26a side on which the inner diameter increases, the outer diameter of the protruding portion 39 on the non-output side is set to be slightly smaller than the outer diameter of the rotor core 31, and the length of the protruding portion 39 in the -Z direction of the rotation axis (the protrusion height of the protruding portion 36) is increased. As a result, the protruding portions 36 and 39 on the output side and the non-output side are formed in different and asymmetrical shapes; however, as long as the relationship between the positions +Zsf and -Zsr of the innermost peripheral portions of the coil end portions (here, inner peripheral portions of the resins 24 and 26) in the direction of the rotation axis Z and the positions +Zrf and -Zrr of the end faces of the protruding portions 36 and 39 that are closer to the end brackets 4 and 5, respectively, satisfies the conditions of |Zsf| ≤ |Zrf| and |Zsr| ≤ |Zrr| in absolute coordinates, the protruding portions 36 and 39 may have symmetrical shapes, or the shapes of the coil ends may be changed to other shapes different from those in Fig. 4.

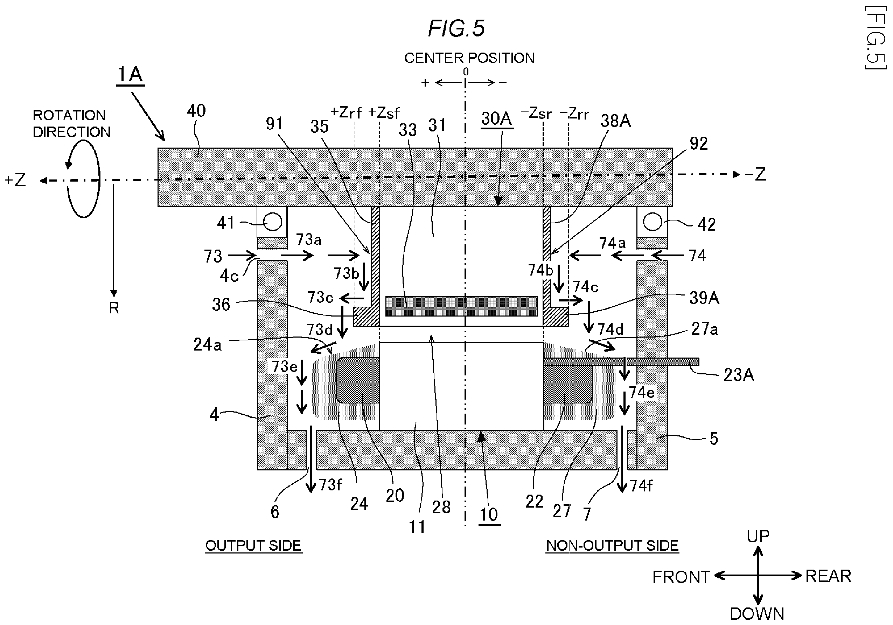

Fig. 5 is a schematic partial cross-sectional view for explaining a configuration of a rotating electrical machine 1A according to a modification example of the first embodiment. The difference from the rotating electrical machine 1 illustrated in Fig. 4 lies in the shape of a lead wire 23A from the coil end 22 on the rear side, and accordingly, the shape of a resin 27 and the shape of a protruding portion 39A are different. The lead wire 23A is linearly drawn out from the stator core 11 in a direction substantially parallel to the rotation axis Z, and in the inner peripheral shape of the resin 27 (tapered portion 27), a tapered portion 27a is formed in plane-symmetry with respect to the center position relative to the resin 24. The shapes of the resins 24 and 27 can be formed by the conventional molding method illustrated in Fig. 9B. In Fig. 9B, molding is performed using two split cores of core dies 310A and 310B.

In Fig. 5, the protruding portions 36 and 39A having a cylindrical shape and being continuous in the circumferential direction are formed on outer peripheral portions of the end plates located radially outward of the spray center points of the liquid coolant onto the end plates, so as to guide the sprayed liquid coolant in directions away from the end plates toward the outer sides (the front side and the rear side) in the direction of the rotation axis. In addition, upon the change in the shape of the resin 27, the protruding portion 36 on the front side and the protruding portion 39A on the rear side can be configured to have the same inner diameter and outer diameter, and the protruding portions 36 and 39A can also be configured to have the same size in the direction of the rotation axis Z (protrusion height). The relationship between the absolute positions +Zsf and -Zsr of the innermost peripheral portions of the coil end portions (here, the innermost peripheral portions of the resins 24 and 27) in the direction of the rotation axis Z and the absolute positions +Zrf and -Zrr of the end faces of the protruding portions 36 and 39A that are closer to the end brackets 4 and 5 satisfies the conditions of |Zsf| ≤ |Zrf| and |Zsr| ≤ |Zrr|. As a result, the end plates 35 and 38A, which are manufactured with the protruding portions 36 and 39A in an integrated configuration, can be used as common components, and therefore, the number of types of components of a rotor 30A can be reduced.

### Second embodiment

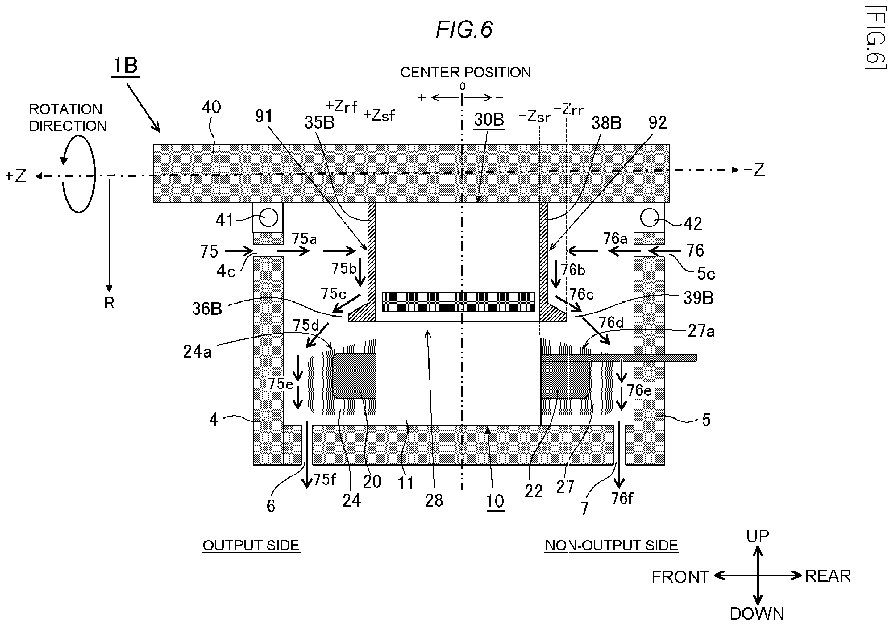

Next, a rotating electrical machine 1B according to a second embodiment of the present invention will be described with reference to Fig. 6. Since the same reference signs are assigned to components overlapping with those of the first embodiment illustrated in Figs. 4 and 5, and redundant description thereof will be omitted. In the rotating electrical machine 1B, the inner peripheral surfaces of protruding portions 36B and 39B of a rotor 30B are formed as inclined surfaces. As illustrated in Fig. 6, each of the inclined surfaces, when viewed in a cross-section including the rotation axis Z, has a cross-sectional shape as a slope such that the inner diameter increases linearly as the inclined surface extends away from the corresponding one of end plates 35B and 38B in the direction of the rotation axis Z. However, since it is sufficient that the inclined surfaces are smoothly inclined, the inclined surfaces may be formed to have a curved cross-sectional shape instead of a linear cross-sectional shape. In Fig. 6, the inclined surfaces of the protruding portions 36B and 39B have shapes that are plane-symmetrical with respect to the center position of the rotor 30B in the direction of the rotation axis Z. In the second embodiment as well, the relationship between the absolute position |Zsf| of the innermost peripheral portion of the resin 24 in the direction of the rotation axis Z and the absolute position |Zrf| of the end face of the protruding portion 36B that is closer to the end bracket 4 satisfies the condition of |Zsf| ≤ |Zrf|. In addition, the relationship between the absolute position |Zsr| of the innermost peripheral portion of the resin 27 in the direction of the rotation axis Z and the absolute position |Zrr| of the end face of the protruding portion 39B that is closer to the end bracket 5 satisfies the condition of |Zsr| ≤ |Zrr|.

Cooling oils 75 and 76 supplied from the oil supply holes 4c and 5c of the end brackets 4 and 5 are sprayed toward the spray center points 91 and 92 as indicated by arrows 75a and 76a, flow as indicated by arrows 75b to 75f and 76b to 76f, and are discharged from the discharge ports 6 and 7 to the outside. At this time, the cooling oils 75 and 76 smoothly flow in the axial direction and the radial direction along the tapered surfaces of the inner peripheries of the protruding portions 36B and 39B, as indicated by arrows 75c and 76c. By forming the inner peripheral surfaces of the protruding portions 36B and 39B in a tapered shape in such a manner, an axial velocity component in directions toward the end brackets 4 and 5 is applied to the cooling oil spraying from the protruding portion 36B and 39B, in addition to a circumferential velocity component and a radial velocity component. As a result, the higher the rotational speed of the rotor 30B is, the farther the cooling oils 75 and 76 spray to positions away from the gap 28 in the direction of the rotation axis A1, so that the occurrence of fluid friction loss due to the entry of the cooling oil into the gap 28 can be suppressed.

### Third embodiment

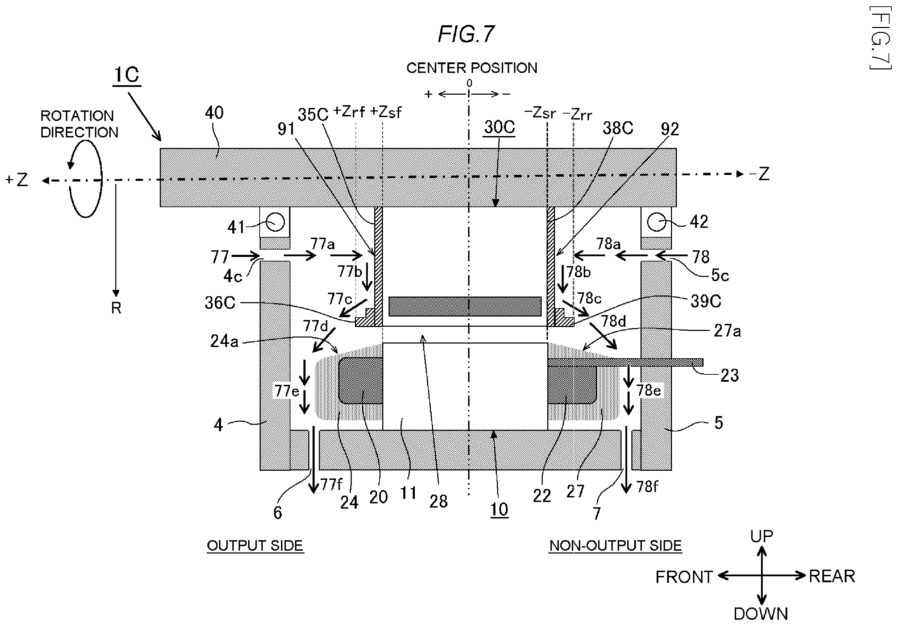

Next, a third embodiment of the present invention will be described with reference to Fig. 7. In a rotating electrical machine 1C of the third embodiment, an end plate 35C including a protruding portion 36C and an end plate 38C including a protruding portion 39C are disposed on end faces on both sides of a rotor 30C. Unlike the second embodiment illustrated in Fig. 6, the shapes of the inner peripheral portions of the protruding portions 36C and 39C are configured in a so-called stepped or step-like shape, in which the inner diameter changes in stages, rather than forming continuous slopes. As illustrated in Fig. 7, the steps, when viewed in a cross-section including the rotation axis Z, are configured such that the inner diameter increases in two stages as the protruding portions 36C and 39C extend away from the end plates 35C or 38C in the +Z direction or -Z direction. The stepped portions of the protruding portions 35C and 38C have shapes that are plane-symmetrical with respect to the center position of the rotor 30C in the direction of the rotation axis Z. In the third embodiment as well, the relationship between the absolute position |Zsf| of the innermost peripheral portion of the coil end portion on the front side (here, the innermost peripheral portion of the resin 24) in the direction of the rotation axis Z and the absolute position |Zrf| of the end face of the protruding portion 39C that is closer to the end bracket 4 satisfies the condition of |Zsf| ≤ |Zrf|. In addition, the relationship between the absolute position |Zsr| of the innermost peripheral portion of the coil end portion on the rear side (here, the innermost peripheral portion of the resin 27) in the direction of the rotation axis Z and the absolute position |Zrr| of the end face of the protruding portion 39C that is closer to the end bracket 5 satisfies the condition of |Zsr| ≤ |Zrr|.

Cooling oils 77 and 78 supplied from the oil supply holes 4c and 5c of the end brackets 4 and 5 are sprayed toward the spray center points 91 and 92 as indicated by arrows 77a and 78a, flow as indicated by arrows 77b to 77f and 78b to 78f, and are discharged from the discharge ports 6 and 7 to the outside. At this time, the cooling oils 77 and 78 flow along the tapered surfaces of the inner peripheries of the protruding portions 36C and 39C while bending in the axial direction and the radial direction as indicated by arrows 77c and 78c. By forming the inner peripheral surfaces of the protruding portions 36C and 39C in a stepped shape in such a manner, an axial velocity component in directions toward the end brackets 4 and 5 is applied to the cooling oil spraying from the protruding portion 36C and 39C, in addition to a circumferential velocity component and a radial velocity component, and the contact time between the protruding portions 36C and 39C and the cooling oils 77 and 78 is increased. In addition, the higher the rotational speed of the rotor 30C is, the farther the cooling oils 77 and 78 spray to positions away from the gap 28, so that the occurrence of fluid friction loss due to the entry of the cooling oils 77 and 78 into the gap 28 can be suppressed.

### Fourth embodiment

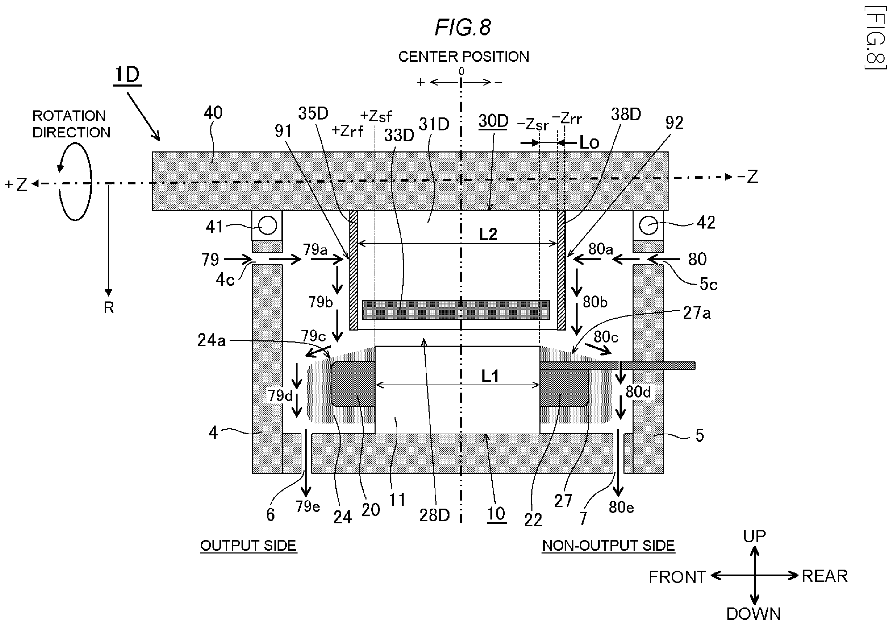

Fig. 8 is a schematic partial cross-sectional view for explaining a configuration of a rotating electrical machine 1D according to a fourth embodiment of the present invention. In the first to third embodiments, the relationship between the absolute positions |Zsf| and |Zsr| of the innermost peripheral portions of the coil end portions (the innermost peripheral portions of the resins 24 and 26) in the direction of the rotation axis Z and the absolute positions |Zrf| and |Zrr| of the end faces of the protruding portions 36 and 39 that are closer to the end brackets 4 and 5, respectively, satisfies the conditions of |Zsf| ≤ |Zrf| and |Zsr| ≤ |Zrr| using the protruding portions 36 and 39 and the like. These conditions can also be satisfied by extending the axial length of a rotor core 31D, even without forming the protruding portions 36 and 39. As illustrated in Fig. 8, the axial length (stack thickness) L2 of the rotor core 31D is larger than the axial length (stack thickness) L1 of the stator core 11 of the stator 10 by Lo on both the output side and the non-output side. Namely, the relationship of L2 = L1 + 2Lo is satisfied. As a result, the position of the front end face of a permanent magnet 33D is located forward of the coordinate +Zsf, and the position of the rear end face of the permanent magnet 33D is located rearward of the coordinate -Zsr, so that the permanent magnet 33D can be formed large. In addition, the relationship satisfies the conditions of |Zsf| ≤ |Zrf| and |Zsr| ≤ |Zrr|, and therefore, the portions of the resins 24 and 27 reached by cooling oils 79 and 80 flowing radially outward from end plates 35D and 38D as indicated by arrows 79b and 80b are located at substantially the axial centers of the tapered portions 24a and 27a, in which the inner diameter increases toward the sides of the end brackets 4 and 5, and the distances between the rotor core 31 and the end faces are relatively large; therefore, the cooling oils 79 and 80 can be effectively prevented from entering a gap 28D.

In the fourth embodiment, with a simple rotor structure, the axial length of the permanent magnet 33D can also be increased by increasing the length of a rotor 30D in the direction of the rotation axis Z (mainly, the stack thickness of the rotor core 31D) As a result, the amount of magnetic flux of the magnets of the rotor 30D increases, thereby enabling characteristics improvements such as increased torque, increased output, and improved efficiency of the rotating electrical machine 1D. It should be noted that, in the present embodiment, the requirements of |Zsf| ≤ |Zrf| and |Zsr| ≤ |Zrr| are achieved by increasing the size of the rotor core 31D; however, these relationships can also be achieved by increasing the thicknesses of the end plates 35D and 38D.

The present invention has been described above based on the four embodiments; however, the present invention is not limited to the above-described embodiments, and can be modified in various forms without departing from the concept of the present invention.

### REFERENCE SIGNS LIST

1, 1A to 1DRotating electrical machine
2 Housing
3 Cylindrical portion
4, 5 End bracket
4a, 5a Through-hole
4b, 5b Bearing holder
4c, 5c Oil supply hole
6, 7 Discharge port
10 Stator
11 Stator core
12 Teeth
13 Back yoke
14 Coil
15 Bobbin
20 Coil end (front side)
22 Coil end (rear side)
23, 23A Lead wire
24, 26, 27 Resin
24a, 26a, 26b, 27a Tapered portion
28, 28D Gap
30, 30A to 30D Rotor
31, 31D Rotor core
32 Slot
33, 33D Permanent magnet
35, 35B, 35C End plate
36 protruding portion
38, 38A to 38C End plate
39, 39A to 39C protruding portion
40 Rotating shaft
41, 42 Bearing
46 Connection plate
51 First cooling passage
52, 53 Cooling oil supply port (second cooling passage)
54, 55 Third cooling passage
56, 57 Pipe connection portion (fourth cooling passage)
71 to 82 Cooling oil (coolant)
91, 92 Spray center point
101, 101A Rotating electrical machine
110 Stator
111 Stator core
120, 122 Coil end
124, 126, 126C Resin
128 Gap
130 Rotor
131 Rotor core
135, 138 End plate
191, 192 Spray center point
300, 300A Mold die
310, 310B Core die
320 Upper die
330 Outer diameter die
340 Lower die
410 Stator
420, 422 Coil end
424, 426 Resin
Z Rotation axis
Zs Z-coordinate of innermost peripheral portion of coil end portion
Zr Z-coordinate of outer surface of end plate of rotor

## Claims

1. A rotating electrical machine comprising:
a rotating shaft;
a rotor including a rotor core and fixed to said rotating shaft;
a stator including a stator core and a coil, coil end portions being formed outward from end portions of said stator core in a direction of a rotation axis, and said stator being disposed on an outer peripheral side of said rotor with a gap between said stator and said rotor; and
a cooling mechanism for spraying a liquid coolant onto axial end faces of said rotor,
wherein lengths of said stator and said rotor in the direction of the rotation axis are set such that coordinates Zrf and Zrr of end portions of said rotor as viewed in the direction of the rotation axis from an axial center position of said rotor and coordinates Zsf and Zsr of innermost peripheral portions of said coil end portions as viewed in the direction of the rotation axis satisfy |Zsf| ≤ |Zrf| and |Zsr| ≤ |Zrr| at least one location in a circumferential direction.

2. The rotating electrical machine claim 1,
wherein end plates are provided on end faces of said rotor core in the direction of the rotation axis, protruding portions having a cylindrical shape and protruding in the direction of the rotation axis are provided in the vicinities of outer peripheries of said end plates, and coordinates of tips of said protruding portions as viewed in the direction of the rotation axis are set such that the relationship of |Zsf| ≤ |Zrf| and |Zsr| ≤ |Zrr| is satisfied.

3. The rotating electrical machine according to claim 2,
wherein an inclined portion is provided on an inner periphery of each of said protruding portions such that an inner diameter increases toward a radially outer side in a linear shape, a curved shape, or a stepped shape.

4. The rotating electrical machine according to claim 2,
wherein said protruding portions on an output side and a non-output side are formed to have different shapes in accordance with a difference in shape between said coil end portions of said stator on said output side and said non-output side.

5. The rotating electrical machine according to any one of claims 2 to 4,
wherein said rotor includes a permanent magnet held in said rotor core, and said permanent magnet is disposed in said rotor core such that a radius Rm of an innermost diameter portion of said permanent magnet and a radius Rt of an innermost diameter portion of each of said protruding portions satisfy Rm < Rt.

6. The rotating electrical machine according to claim 1,
wherein a length of said rotor core in the direction of the rotation axis is set to be larger than a length of said stator core in the direction of the rotation axis.

7. The rotating electrical machine according to any one of claims 1 to 4,
wherein each of said coil end portions includes a coil end and a resin molding said coil end, and
a tapered portion, in which an inner diameter increases from said stator core toward a tip side of said coil end, is formed on an inner peripheral surface of said resin, and an apex portion at which the inner diameter of said tapered portion is at its minimum defines the coordinate Zr.

8. The rotating electrical machine according to claim 7,
wherein said tapered portion is provided between lead wires drawn out from said coil.

9. A rotating electrical machine comprising:
a rotating shaft;
a rotor fixed to said rotating shaft, and including a rotor core having a cylindrical shape, a plurality of permanent magnets disposed in said rotor core, and end plates provided on end faces of said rotor core in a direction of a rotation axis; a stator including a stator core and a coil, coil end portions being formed outward from end portions of said stator core in the direction of the rotation axis; and
a cooling mechanism for spraying a liquid coolant onto said end plates of said rotor core,
wherein protruding portions having a cylindrical shape and being continuous in a circumferential direction are formed on outer peripheral portions of said end plates located radially outward of spray center points of said liquid coolant onto said end plates, so as to guide sprayed liquid coolant in directions away from said end plates toward outer sides in the direction of the rotation axis.

10. The rotating electrical machine according to claim 9,
wherein positions of said stator and said protruding portions in the direction of the rotation axis are set such that a coordinate Zr of an end portion of each of said protruding portions of said rotor as viewed in the direction of rotation axis from an axial center position of said rotor and a coordinate Zs of an innermost peripheral portion of corresponding said coil end portion in the direction of the rotation axis satisfy |Zs| ≤ |Zr|.

11. The rotating electrical machine according to claim 10,
wherein an inclined portion is provided on an inner peripheral surface of each of said protruding portions such that an inner diameter increases toward a radially outer side in a linear shape, a curved shape, or a stepped shape.

12. The rotating electrical machine according to claim 10,
wherein said protruding portions of said end plates of said rotor are formed to have different shapes between an output side and a non-output side in accordance with a difference in shape between the coil end portions of said stator on the output side and the non-output side.

13. The rotating electrical machine according to any one of claims 9 to 12,
wherein said rotor includes said permanent magnets held in said rotor core, and each of said permanent magnets is disposed in said rotor core such that a radius Rm of an innermost diameter portion of said permanent magnet and a radius Rt of an innermost diameter portion of each of said protruding portions satisfy Rm < Rt.

## Amended claims

### Amended claims under Art. 19.1 PCT

1. (Amended) A rotating electrical machine comprising:
a rotating shaft;
a rotor including a rotor core and fixed to said rotating shaft;
a stator including a stator core and a coil, coil end portions being formed outward from end portions of said stator core in a direction of a rotation axis, each of said coil end portions includes a coil end and a resin molding said coil end, and said stator being disposed on an outer peripheral side of said rotor with a gap between said stator and said rotor; and
a cooling mechanism for spraying a liquid coolant onto axial end faces of said rotor;
end plates are provided on end faces of said rotor core in the direction of the rotation axis;
protruding portions having a cylindrical shape and protruding in the direction of the rotation axis are provided in the vicinities of outer peripheries of said end plates; and
said liquid coolant is sprayed such that spray center points are located on inner peripheral surfaces of said protruding portions of said end plates;
wherein lengths of said stator and said rotor in the direction of the rotation axis are set such that coordinates Zrf and Zrr of end portions of said rotor as viewed in the direction of the rotation axis from an axial center position of said rotor and coordinates Zsf and Zsr of innermost peripheral portions of said coil end portions as viewed in the direction of the rotation axis satisfy |Zsf| ≤ |Zrf| and |Zsr| ≤ |Zrr| at least one location in a circumferential direction.

2. (Amended) The rotating electrical machine according to claim 1,
wherein end plates are provided on end faces of said rotor core in the direction of the rotation axis, protruding portions having a cylindrical shape and protruding in the direction of the rotation axis are provided in the vicinities of outer peripheries of said end plates, and coordinates of tips of said protruding portions as viewed in the direction of the rotation axis are set such that the relationship of |Zsf| ≤ |Zrf| and |Zsr| ≤ |Zrr| is satisfied.

3. The rotating electrical machine according to claim 2,
wherein an inclined portion is provided on an inner periphery of each of said protruding portions such that an inner diameter increases toward a radially outer side in a linear shape, a curved shape, or a stepped shape.

4. The rotating electrical machine according to claim 2,
wherein said protruding portions on an output side and a non-output side are formed to have different shapes in accordance with a difference in shape between said coil end portions of said stator on said output side and said non-output side.

5. The rotating electrical machine according to any one of claims 2 to 4,
wherein said rotor includes a permanent magnet held in said rotor core, and said permanent magnet is disposed in said rotor core such that a radius Rm of an innermost diameter portion of said permanent magnet and a radius Rt of an innermost diameter portion of each of said protruding portions satisfy Rm < Rt.

6. The rotating electrical machine according to claim 1,
wherein a length of said rotor core in the direction of the rotation axis is set to be larger than a length of said stator core in the direction of the rotation axis.

7. (Amended) The rotating electrical machine according to any one of claims 1 to 4,
wherein a tapered portion, in which an inner diameter increases from said stator core toward a tip side of said coil end, is formed on an inner peripheral surface of said resin, and an apex portion at which the inner diameter of said tapered portion is at its minimum defines the coordinate Zr.

8. The rotating electrical machine according to claim 7,
wherein said tapered portion is provided between lead wires drawn out from said coil.

9. (Amended) A rotating electrical machine comprising:
a rotating shaft;
a rotor fixed to said rotating shaft, and including a rotor core having a cylindrical shape, a plurality of permanent magnets disposed in said rotor core, and disk-shaped end plates provided on end faces of said rotor core in a direction of a rotation axis;
a stator including a stator core and a coil, coil end portions being formed outward from end portions of said stator core in the direction of the rotation axis; and
a cooling mechanism for spraying a liquid coolant onto said end plates of said rotor core,
wherein protruding portions having a cylindrical shape and being continuous in a circumferential direction are formed on outer peripheral portions of said end plates located radially outward of spray center points of said liquid coolant onto said end plates, so as to guide sprayed said liquid coolant in directions away from said end plates toward outer sides in the direction of the rotation axis.

10. The rotating electrical machine according to claim 9,
wherein positions of said stator and said protruding portions in the direction of the rotation axis are set such that a coordinate Zr of an end portion of each of said protruding portions of said rotor as viewed in the direction of rotation axis from an axial center position of said rotor and a coordinate Zs of an innermost peripheral portion of corresponding said coil end portion in the direction of the rotation axis satisfy |Zs| ≤ |Zr|.

11. The rotating electrical machine according to claim 10,
wherein an inclined portion is provided on an inner peripheral surface of each of said protruding portions such that an inner diameter increases toward a radially outer side in a linear shape, a curved shape, or a stepped shape.

12. The rotating electrical machine according to claim 10,
wherein said protruding portions of said end plates of said rotor are formed to have different shapes between an output side and a non-output side in accordance with a difference in shape between the coil end portions of said stator on the output side and the non-output side.

13. The rotating electrical machine according to any one of claims 9 to 12,
wherein said rotor includes said permanent magnets held in said rotor core, and each of said permanent magnets is disposed in said rotor core such that a radius Rm of an innermost diameter portion of said permanent magnet and a radius Rt of an innermost diameter portion of each of said protruding portions satisfy Rm < Rt.

Statement under Art. 19.1 PCT
The Applicant, who received the International Search Report relating to the above identified International Application transmitted on September 17, 2024, hereby files amendment under Article 19(1) as in the attached sheets.

We hereby would like to amend the claims 1, 2, 7 and 9.

In claim 1, the sentence of "each of said coil end portions includes a coil end and a resin molding said coil end" is inserted. This sentence was a part of claim 7 as filed, and it was deleted from the amended claim 7.

In claim 1, the sentences of "end plates are provided on end faces of said rotor core in the direction of the rotation axis,
 protruding portions having a cylindrical shape and protruding in the direction of the rotation axis are provided in the vicinities of outer peripheries of said end plates" are also inserted to claim 1. These sentences was a part of claim 2 as filed, and it was deleted from amended claim 2.

In claim 1, the sentence of "said liquid coolant is sprayed such that spray center points are located on inner peripheral surfaces of said protruding portions of said end plates" is also inserted to claim 1, which is based on the paragraphs [0031] of the specification and FIG.4.

In claim 2, line 1, "according to" is inserted, which is a simple mistake.

In claim 9, line 1, "disk-shaped" is inserted, which is based on the paragraphs [0031] of the specification and Fig. 4.

In claim 9, line 10, "said" is inserted, which is a simple mistake.

The Applicant also files as attached herewith a brief statement for explaining the amendments.
